# EUROPÄISCHE PATENTANMELDUNG

(11) **EP 3 696 621 A1**
(43) Veröffentlichungstag der Anmeldung: **19.08.2020**
(21) Anmeldenummer: 19157169.4
(22) Anmeldetag: 14.02.2019
(51) Int. Cl.: G05B 13/04, G05B 19/418

(54) **COMPUTERIMPLEMENTIERTES VERFAHREN UND VORRICHTUNG ZUM STEUERN EINES MODULAREN TECHNISCHEN SYSTEMS**

(71) Anmelder: Siemens Aktiengesellschaft, 80333 München (DE)
(72) Erfinder: Botero Halblaub, Andrés, 85614 Kirchseeon (DE); Götz, Jan, 91054 Buckenhof (DE); Schenk, Tim, 84034 Landshut (DE); Wehrstedt, Jan Christoph, 81829 München (DE); Heinzerling, Till, 76185 Karlsruhe (DE)

(57) **Zusammenfassung**

Die Erfindung betrifft ein computerimplementiertes Verfahren zum Steuern eines modularen technischen Systems (MTS), wobei das modulare technische System (MTS) eine Vielzahl von Modulen (M1, M2, M3, ...) umfasst und Fähigkeiten der Module von einer modulübergreifenden Steuerung (POL) gesteuert werden, wobei für ein jeweiliges Modul (M1, M2, M3, ...) des modularen technischen Systems (MTS) ein modulspezifisches computergestütztes Simulationsmodell (SM1, SM2, ...) bereitgestellt wird (S1) und die Fähigkeiten des entsprechenden Moduls (M1, M2, M3, ...) im modulspezifischen Simulationsmodell (SM1, SM2, ...) spezifiziert sind. Gemäß einer vorgegebenen Anordnung (TOP) der Module des modularen technischen Systems (MTS) werden die modulspezifischen computergestützten Simulationsmodelle (SM1, SM2, ...) miteinander gekoppelt (S2). Mittels eines Optimierungsverfahrens (OPT) werden eine Orchestrierung (P1) und/oder Parameter (P2) der Fähigkeiten der gekoppelten modulspezifischen Simulationsmodelle (SM1, SM2, ...) derart ermittelt (S3), dass die Fähigkeiten untereinander zeitlich und logisch koordiniert werden und insbesondere eine vorgegebene Spezifikation (SPEC) des modularen technischen Systems (MTS) erfüllt wird.

## Beschreibung

Die Erfindung betrifft ein computerimplementiertes Verfahren und eine Vorrichtung zum Steuern eines modularen technischen Systems. Des Weiteren ist die Erfindung auf ein Computerprogrammprodukt und ein computerlesbares Speichermedium gerichtet.

Modulare technische Systeme, wie z.B. modulare Prozess- bzw. Produktionsanlagen, können insbesondere in der Verfahrenstechnik, wie z.B. in der chemischen oder pharmazeutischen Industrie, eingesetzt werden. Es werden hierfür in der Regel eine Vielzahl von verfahrenstechnischen (Hardware-)Modulen, auch als modulare Prozesseinheiten (engl. Process Equipment Assemblies) bezeichnet, verwendet, die in sich abgeschlossen sind und sich von einem Modulintegrator zu komplexen Gesamtanlagen verschalten lassen, um beispielsweise ein vorgegebenes Produkt als Ausgabe zu produzieren. Die Zusammenschaltung von Modulen kann insbesondere eine Reduzierung der Planungs- und Umbauzeit neuer Anlagen ermöglichen. Die Module können in der Regel jeweils eine eigene Steuerungs- bzw. Automatisierungstechnik umfassen, die beim Betrieb der modularen Anlage von einer zentralen Steuerung, auch als Prozessorchestrierungsebene oder Prozessführungsebene (engl. Process Orchestration Layer; supervisory control layer) bezeichnet, fähigkeits- bzw. servicebasiert angesteuert werden können.

Für die zentrale Steuerung wird insbesondere eine Regelungsstrategie in Form eines Automatisierungscodes benötigt. Die Erstellung der Regelungsstrategie ist insbesondere abhängig vom Aufbau und/oder einer Anforderungsspezifikation der jeweiligen Prozessanlage. Je nach Komplexität der (modularen) Prozessanlage, kann die Erstellung einer zentralen Regelungsstrategie mit einem hohen Programmieraufwand verbunden sein und sie kann fehleranfällig sein.

Es ist eine Aufgabe der vorliegenden Erfindung, die Erstellung einer Regelungsstrategie für ein modulares technisches System zu vereinfachen.

Die Aufgabe wird durch die in den unabhängigen Ansprüchen beschriebenen Maßnahmen gelöst. In den abhängigen Ansprüchen sind vorteilhafte Weiterbildungen der Erfindung dargestellt.

Gemäß einem ersten Aspekt betrifft die Erfindung ein computerimplementiertes Verfahren zum Steuern eines modularen technischen Systems, wobei das modulare technische System eine Vielzahl von Modulen umfasst und Fähigkeiten der Module von einer modulübergreifenden Steuerung gesteuert werden, wobei
- für ein jeweiliges Modul des modularen technischen Systems ein modulspezifisches computergestütztes Simulationsmodell bereitgestellt wird, wobei die Fähigkeiten des entsprechenden Moduls im modulspezifischen Simulationsmodell spezifiziert sind,
- gemäß einer vorgegebenen Anordnung der Module des modularen technischen Systems die modulspezifischen computergestützten Simulationsmodelle miteinander gekoppelt werden,
- eine Orchestrierung und/oder Parameter der Fähigkeiten der gekoppelten modulspezifischen Simulationsmodelle mittels eines Optimierungsverfahrens derart ermittelt werden, dass die Fähigkeiten untereinander zeitlich und logisch koordiniert werden,
   und
- die optimierte Orchestrierung und/oder die optimierten Parameter zum Steuern des modularen technischen Systems ausgegeben werden.

Ein "modulares technisches System" kann im Zusammenhang mit der Erfindung insbesondere eine modulare, verfahrenstechnische Anlage, eine modulare Prozessanlage oder eine modulare Produktionsanlage sein. Das modulare technische System umfasst insbesondere Hardware- und/oder Software-Module, die miteinander gekoppelt sind, um beispielsweise ein Zielprodukt herzustellen.

Unter einem "Modul" können im Zusammenhang mit der Erfindung insbesondere ein Hardware-Modul, eine Teilanlage oder ein Anlagenmodul, wie z.B. (Feld-)Geräte oder Pumpen, verstanden werden. Ein Modul kann auch als modulare Prozesseinheit (engl. Process Equipment Assembly) bezeichnet werden. Bestandteile eines Moduls können insbesondere Aktoren, Sensoren, verfahrenstechnische Prozesse, prozesstechnische Anschlüsse, statische Apparate, Ansteuerungs- und Kommunikationsschnittstellen und eine eigene Automatisierungstechnik sein.

Die Module des modularen technischen Systems werden in der Regel jeweils von moduleigenen Automatisierungskomponenten gesteuert. Eine Automatisierungskomponente kann auch als Steuerung, Steuerkomponente oder Steuergerät bezeichnet werden und ist in der Regel eine elektronische Komponente zum Zweck der Steuerung eines technischen Prozesses bzw. einer Schrittkette. Bei einem modularen technischen System können die Fähigkeiten bzw. Services der einzelnen Module jeweils von einer zentralen Steuerung angesteuert werden. In anderen Worten, die Services der jeweiligen Module können insbesondere mittels Systemaufrufen (API-Calls) von einer zentralen Steuerungsebene koordiniert werden.

Unter "Fähigkeiten" eines Moduls können insbesondere Funktionen, Dienste bzw. Services oder ähnliches verstanden werden. Die Fähigkeiten der einzelnen Module des modularen technischen Systems können modulübergreifend von einer zentralen Steuerung orchestriert werden.

Der aktuelle (Ist-)Zustand, insbesondere die Topologie bzw. Anordnung, der modularen Anlage, z.B. eine aktuelle Anordnung bzw. Konfiguration, wird vorzugsweise zunächst erfasst und dementsprechend können die Simulationsmodelle der vorhandenen Module verschaltet werden.

Ein "Simulationsmodell" eines (Hardware-)Moduls kann insbesondere alle physikalischen und technischen Merkmale und Funktionen des realen Moduls abbilden. Insbesondere kann ein Simulationsmodell als ein Verhaltensmodell eines Moduls verstanden werden, das die Services des Moduls umfasst. Unter "computergestützten Simulationsmodell" kann insbesondere ein Simulationsmodell verstanden werden, das auf einem Prozessor ausgeführt werden kann. Unter einer Ausführung einer computergestützten Simulation sei insbesondere eine Ermittlung eines dynamischen Verhaltens und/oder Verhaltensabbildung anhand des physikalischen Modells verstanden. Für ein jeweiliges Modul kann ein Simulationsmodell beispielsweise von einer Speichereinheit oder von einer Datenbank eingelesen und für die folgenden Verfahrensschritte bereitgestellt werden. Ein computergestütztes Simulationsmodell kann insbesondere empirisch erstellt werden. Vorzugsweise können die Simulationsmodelle der Module derart bereitgestellt werden, dass die zugrundeliegenden (algebraischen) Gleichungssysteme und/oder Eingaben bzw. Ausgaben verfügbar bzw. nutzbar sind. Die Gleichungssysteme können insbesondere dem Optimierungsverfahren übergeben werden, so dass ein Optimierungsproblem aufgestellt werden kann. Ein Gleichungssystem kann insbesondere ein Differentialgleichungssystem, d.h. eine mathematische Beschreibung des Prozessverhaltens eines Moduls oder einer Anlage, sein.

Unter einem "Prozessor" kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, ein Server etc. handeln.

Das computergestützte Simulationsmodell eines Moduls umfasst insbesondere eine Abbildung der Fähigkeiten des Moduls. In anderen Worten, die Systemaufrufe der Services können im Simulationsmodell spezifiziert sein. Unter "Fähigkeiten" können insbesondere auch Dienste bzw. Services verstanden werden. Die Fähigkeiten sind insbesondere formal spezifiziert bzw. semantisch beschrieben, d.h. die Fähigkeiten sind derart beschrieben, dass deren Semantik eindeutig definiert ist.

Die computergestützten Simulationsmodelle der Module eines modularen technischen Systems werden gemäß einer Anordnung des modularen technischen Systems miteinander gekoppelt. Unter einer "Anordnung" eines modularen technischen Systems kann insbesondere eine Topologie und/oder ein Aufbau und/oder eine Ausgestaltung des modularen technischen Systems verstanden werden. Die Simulationsmodelle können beispielsweise in einer Simulationsumgebung miteinander gekoppelt werden, d.h. insbesondere Ein- und Ausgänge von Datenströmen der jeweiligen Simulationsmodelle können verschaltet werden. Durch die Kopplung der Simulationsmodelle kann vorzugsweise ein Gesamtsimulationsmodell des modularen technischen Systems realisiert werden.

Unter "Parametern" können z.B. Konfigurationsparameter der Fähigkeiten eines Moduls verstanden werden. Unter Orchestrierung kann insbesondere das Kombinieren von Diensten bzw. Fähigkeiten verstanden werden, um einen Prozess durchzuführen. Insbesondere kann mittels der Orchestrierung eine Reihenfolge der Prozess- bzw. Ablaufsteuerung beschrieben werden. Die Orchestrierung und Parameter der Fähigkeiten können insbesondere als Projektierung bezeichnet werden.

Die Orchestrierung und/oder die Parameter der gekoppelten Simulationsmodelle können mittels eines geeigneten Optimierungsverfahrens bestimmt werden. Unter zeitlicher und logischer Koordination kann beispielsweise das Aufrufen eines Dienstes zu einem abgestimmten Zeitpunkt verstanden werden.

Es ist ein Vorteil der vorliegenden Erfindung, dass mittels eines Optimierungsverfahrens die optimierten Parameter und/oder die optimierte Orchestrierung für das Gesamtsimulationsmodell eines modularen technischen Systems ermittelt werden können. Daraus kann eine Steuerungsstrategie abgeleitet werden. In anderen Worten, eine optimierte Steuerungsstrategie kann auf der Basis der optimierten Orchestrierung und/oder Parameter ermittelt werden. Dies kann beispielsweise im laufenden Betrieb des modularen technischen Systems, d.h. in Echtzeit, durchgeführt werden, um eine optimierte Steuerungsstrategie zu ermitteln. Insbesondere kann derart eine optimierte Koordination und/oder Parametrisierung der Fähigkeiten erreicht werden. Fehler bei der Bestimmung der Steuerungsstrategie bzw. beim Erstellen des Steuerungscodes für ein modulares technisches System können vermieden werden. Vorzugsweise können mittels des Optimierungsverfahrens diskrete Werte für die korrekte Ansteuerung der Modulfähigkeiten ermittelt werden.

In einer vorteilhaften Ausführungsform des computerimplementierten Verfahrens kann geprüft werden, ob die ermittelte Orchestrierung und/oder die ermittelten Parameter der Fähigkeiten eine vorgegebenen Spezifikation des modularen technischen Systems erfüllen, und es kann ein Ergebnis der Prüfung ausgegeben werden.

Insbesondere werden optimierte Parameter und/oder die Orchestrierung für die Fähigkeiten der gekoppelten Simulationsmodelle ermittelt, so dass die jeweiligen Fähigkeiten der Module untereinander zeitlich und logisch koordiniert werden und eine vorgegebene Spezifikation des modularen technischen Systems, insbesondere eine Anforderungsspezifikation oder eine Verhaltensspezifikation, erfüllt wird. Eine Spezifikation kann insbesondere die zu erzielenden Ergebnisse des Prozesses, wie z.B. Produktmenge, Reinheit oder Zustände, umfassen. Die Überprüfung, ob dies erfüllt ist, kann beispielsweise mittels eines Datenvergleichs erfolgen. Eine Spezifikation des modularen technischen Systems kann insbesondere formal dargestellt sein.

Insbesondere kann das Optimierungsverfahren zum Ergebnis kommen, dass es keine zulässige Lösung gibt. Beispielsweise kann getestet werden, ob eine reale modulare Prozessanlage ein vorgegebenes Produkt herstellen oder einen Zielwert erreichen bzw. einhalten kann. Die Prüfung kann beispielsweise anhand eines Vergleichs von Ausgabedaten mit Spezifikationsdaten erfolgen.

In einer vorteilhaften Ausführungsform des computerimplementierten Verfahrens können die Orchestrierung und/oder der gekoppelten Fähigkeiten mittels des Optimierungsverfahrens derart bestimmt werden, dass eine vorgegebene Zielfunktion für das modulare technische System optimiert wird.

Eine Zielfunktion kann beispielsweise eine Zeitdauer, Ressourcen, Leistung oder Energieverbrauch des modularen technischen Systems betreffen.

In einer vorteilhaften Ausführungsform des computerimplementierten Verfahrens können die Orchestrierung und/oder die Parameter der Fähigkeiten mittels des Optimierungsverfahrens derart bestimmt werden, dass mindestens eine vorgegebene Randbedingung eines modulspezifischen computergestützten Simulationsmodells erfüllt wird.

Eine Randbedingung eines Simulationsmodells eines Moduls kann beispielsweise eine Vorgabe oder ein Grenzwert sein, die das Modul betrifft, wie z.B. eine Füllhöhe eines Tanks.

In einer vorteilhaften Ausführungsform des computerimplementierten Verfahrens kann für ein jeweiliges Modul ein modulspezifisches computergestütztes Simulationsmodell erstellt werden, wobei die Fähigkeiten des entsprechenden Moduls im modulspezifischen Simulationsmodell semantisch beschrieben werden.

Die Generierung eines modulspezifischen Simulationsmodells kann insbesondere die computergestützte Modellierung des jeweiligen Moduls und die formale Beschreibung der Fähigkeiten des Moduls umfassen. Dazu kann insbesondere die Anordnung der realen Prozessanlage erfasst werden. Ein Simulationsmodell kann insbesondere generiert, auf einem Speichermedium gespeichert und für die Ausführung der Optimierung bereitgestellt werden.

In einer vorteilhaften Ausführungsform des computerimplementierten Verfahrens können, nach einer Änderung der Anordnung des modularen technischen Systems, gemäß der geänderten Anordnung die modulspezifischen computergestützten Simulationsmodelle miteinander gekoppelt und eine optimierte Orchestrierung und/oder optimierte Parameter der Fähigkeiten ermittelt werden.

Eine Änderung der Anordnung des modularen technischen Systems kann beispielsweise vorliegen, wenn ein Modul gewechselt, abgetrennt oder abgeschaltet, umgebaut, ersetzt oder neu hinzugefügt wird. Vorzugsweise kann nach einer Änderung eines Moduls, und vor Inbetriebnahme des geänderten modularen technischen Systems, für das geänderte Modul ein geändertes modulspezifisches computergestütztes Simulationsmodell bereitgestellt werden. Vorzugsweise kann nach einer solchen Änderung und vor Inbetriebnahme erneut eine Optimierung durchgeführt und somit eine optimierte Orchestrierung und/oder optimierte Parameter für Fähigkeiten der geänderten Module ermittelt werden. Insbesondere kann dies vor einer Inbetriebnahme einer Anlage durchgeführt werden, um beispielsweise eine Service-Orchestrierung und Service-Parametrierung zu bestimmen, die einen optimalen Betrieb garantiert.

In einer vorteilhaften Ausführungsform des computerimplementierten Verfahrens können nach einer Änderung der Spezifikation des modularen technischen Systems eine Orchestrierung und/oder Parameter der Fähigkeiten mittels des Optimierungsverfahrens derart ermittelt werden, dass die geänderte Spezifikation des modularen technischen Systems erfüllt wird.

Insbesondere kann die Spezifikation des modularen technischen Systems geändert werden, wenn beispielsweise die Anordnung geändert wurde. Alternativ kann beispielsweise eine Änderung der Spezifikation vorliegen, wenn das modulare technische System zum Ausführen eines anderen Prozesses konfiguriert wird.

In einer vorteilhaften Ausführungsform des computerimplementierten Verfahrens können die optimierte Orchestrierung und/oder optimierten Parameter an die modulübergreifende Steuerung ausgegeben werden.

Insbesondere können die optimierte Orchestrierung und/oder die optimierten Parameter direkt an die modulübergreifende Steuerung übermittelt werden. Vorzugsweise werden nach einer Änderung der Spezifikation, eines Moduls und/oder der Anordnung die erneut ermittelte Orchestrierung und/oder Parameter an die modulübergreifende Steuerung übermittelt, um insbesondere einen optimierten Prozessablauf zu gewährleisten.

In einer vorteilhaften Ausführungsform des computerimplementierten Verfahrens kann das modulare technische System anhand der optimierten Orchestrierung und/oder der optimierten Parameter der Fähigkeiten gesteuert werden.

Gemäß einem zweiten Aspekt betrifft die Erfindung eine Vorrichtung zum Steuern eines modularen technischen Systems, wobei die Vorrichtung mindestens einen Prozessor zum Durchführen der Schritte eines erfindungsgemäßen Verfahrens aufweist.

Die Vorrichtung kann beispielsweise auch in der zentralen Steuerung integriert sein.

In einer vorteilhaften Ausführungsform kann die Vorrichtung mit einer modulübergreifenden Steuerung zum Steuern des modularen technischen Systems gekoppelt sein. Eine modulübergreifende Steuerung kann auch als Prozessorchestrierungsebene (engl. Process Orchestration Layer) bezeichnet werden.

Des Weiteren betrifft die Erfindung ein Computerprogrammprodukt, das direkt in einen programmierbaren Computer ladbar ist, umfassend Programmcodeteile, die bei der Ausführung des Programms durch einen Computer diesen veranlassen, das Verfahren/die Schritte eines Verfahrens auszuführen und ein computerlesbares Speichermedium mit einem erfindungsgemäßen Computerprogrammprodukt.

Ein Computerprogrammprodukt kann beispielsweise auf einem Speichermedium, wie z.B. Speicherkarte, USB-Stick, CD-ROM, DVD, ein nichtflüchtiger/dauerhaftes Speichermedium (engl. Non-transitory storage Medium) oder auch in Form einer herunterladbaren Datei von einem Server in einem Netzwerk bereitgestellt oder geliefert werden.

Ausführungsbeispiele des erfindungsgemäßen Verfahrens und der erfindungsgemäßen Vorrichtung sind in den Figuren beispielhaft dargestellt und werden anhand der nachfolgenden Beschreibung näher erläutert. Es zeigen:
- Fig. 1: ein Ablaufdiagramm eines erfindungsgemäßen computerimplementierten Verfahrens;
- Fig. 2: eine schematische Darstellung eines erfindungsgemäßen computerimplementierten Verfahrens; und
- Fig. 3: eine schematische Darstellung einer erfindungsgemäßen Vorrichtung.

Einander entsprechende Gegenstände sind in allen Figuren mit den gleichen Bezugszeichen versehen.

Insbesondere zeigen die nachfolgenden Ausführungsbeispiele lediglich beispielhafte Realisierungsmöglichkeiten, wie insbesondere solche Realisierungen der erfindungsgemäßen Lehre aussehen könnten, da es unmöglich und auch für das Verständnis der Erfindung nicht zielführend oder notwendig ist, all diese Realisierungsmöglichkeiten zu benennen.

Auch sind insbesondere einem (einschlägigen) Fachmann in Kenntnis des/der Verfahrensanspruchs/Verfahrensansprüche alle im Stand der Technik üblichen Möglichkeiten zur Realisierung der Erfindung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware(komponenten) oder ausschließlich per Software(komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen.

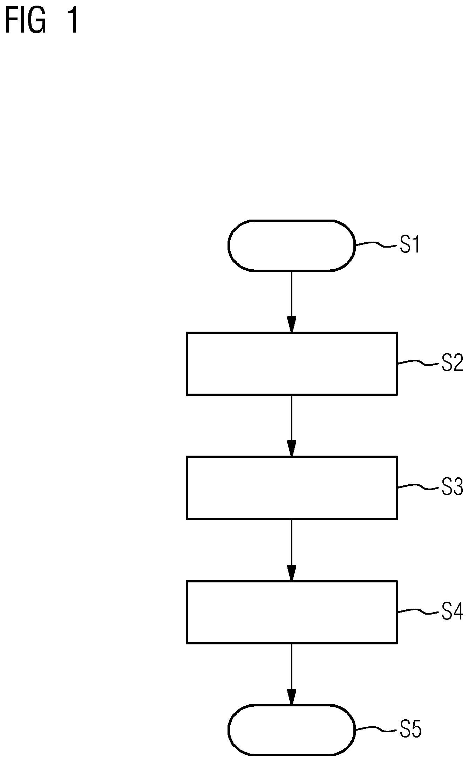

Figur 1 zeigt ein Ausführungsbeispiel eines erfindungsgemäßen, computerimplementierten Verfahrens zum Steuern eines modularen technischen Systems, wobei vorzugsweise zumindest teilweise Schritte des Verfahrens von einem Prozessor ausgeführt werden. Ein modulares technisches System ist insbesondere aus einer Vielzahl von Modulen, insbesondere Hardware-Modulen, aufgebaut. Ein modulares technisches System kann insbesondere eine modular aufgebaute Prozessanlage, beispielsweise der chemischen oder pharmazeutischen Industrie, sein.

Ein modulares technisches System kann mehrere Module umfassen, die austauschbar konfiguriert sein können. Die Module können jeweils eine eigene Steuerungs- bzw. Automatisierungstechnik umfassen, die beispielsweise Sensoren und/oder Aktoren des Moduls ansteuert. Vorzugsweise können verschiedene Module über physikalische Schnittstellen miteinander gekoppelt werden. Ein Modul kann beispielsweise einen Prozessschritt eines Prozesses und/oder lediglich einen Teil eines Prozessschrittes realisieren. Die Steuerung eines Prozesses eines modularen technischen Systems kann insbesondere über eine zentrale Prozessorchestrierungsebene gesteuert werden, die die Fähigkeiten bzw. Services der jeweiligen Module ansteuert bzw. aufruft.

Das modulare technische System weist insbesondere eine Anordnung der Module, auch als Topologie bezeichnet, auf. Die Anordnung gibt beispielsweise an, welche Module vorhanden sind, wie die Module miteinander gekoppelt sind und/oder in welcher Reihenfolge Prozessschritte ablaufen. Für die vorhandenen realen Module können jeweils computergestützte Simulationsmodelle generiert und/oder bereitgestellt werden.

Eine Spezifikation, insbesondere eine formale Spezifikation, des modularen technischen Systems können beispielsweise eine Systemvorgabe und/oder ein Produktionsziel sein.

Im ersten Schritt S1 des erfindungsgemäßen, computerimplementierten Verfahrens wird für ein jeweiliges Modul des modularen technischen Systems ein modulspezifisches computergestütztes Simulationsmodell bereitgestellt. Im jeweiligen Simulationsmodell sind insbesondere die Fähigkeiten des entsprechenden Moduls spezifiziert, d.h. es liegt beispielsweise eine semantische Beschreibung der Fähigkeiten vor, die insbesondere computerinterpretierbar ist. Für ein modulare Prozessanlage können jeweils computergestützte Simulationsmodelle für die Module von einem jeweiligen Modulhersteller erstellt und einem Anlagenintegrator übermittelt werden. Alternativ können entsprechende Simulationsmodelle auf einer Speichereinheit oder in einer Datenbank gespeichert und dort abgerufen werden. Vorzugsweise werden die computergestützten Simulationsmodelle derart bereitgestellt, dass deren zugrundeliegenden mathematischen Gleichungssysteme verfügbar sind.

Im nächsten Schritt S2 wird gemäß der vorgegebenen Anordnung der Module des modularen technischen Systems ein Gesamtsimulationsmodell erstellt. Dazu werden gemäß der Anordnung die modulspezifischen computergestützten Simulationsmodelle angeordnet und miteinander, beispielsweise in einer Simulationsumgebung, gekoppelt. Vorzugsweise liegen die mathematischen Gleichungen, insbesondere Differentialgleichungen, der computergestützten Simulationsmodelle vor. Auf Basis der Anordnung der Module kann daraus ein Gleichungssystem erstellt werden.

Im nächsten Schritt S3 können mittels der gekoppelten computergestützten Simulationsmodelle, der Anordnung des modularen technischen Systems und einer vorgegebenen Spezifikation des modularen technischen Systems eine Steuerungsstrategie für das modulare technische System ermittelt werden. Dazu wird mittels eines Optimierungsverfahrens, beispielsweise einem ganzzahligen linearen Optimierungsverfahrens, eine optimierte Orchestrierung der Fähigkeiten und Parameter der Fähigkeiten der gekoppelten modulspezifischen Simulationsmodelle ermittelt. Die Orchestrierung und/oder die Parameter werden insbesondere derart ermittelt, dass die jeweiligen modellierten Fähigkeiten der Module untereinander zeitlich und logisch koordiniert werden und die Spezifikation des modularen technischen Systems erfüllt wird.

In anderen Worten, die Parameter der jeweiligen Fähigkeiten der modulspezifischen Simulationsmodelle werden derart angepasst und die Orchestrierung derart eingestellt, dass ein Prozessablauf des modularen technischen Systems in korrekter Reihenfolge und Umsetzung abgebildet wird. Die Anpassung der Parameter und der Orchestrierung kann beispielsweise iterativ erfolgen. Ein Ergebnis der Optimierung kann insbesondere dann ausgegeben werden, wenn mindestens ein lokales Optimum ermittelt wurde. Es wird ein Optimierungsproblem aufgestellt und gelöst, bei dem die Parameter so gewählt werden, dass eine Zielfunktion maximiert bzw. minimiert wird, wobei das Gesamtsimulationsmodell sowie Grenzwerte als Nebenbedingung erfüllt werden müssen.

Alternativ kann beispielsweise auch mittels des Optimierungsverfahrens geprüft werden, ob eine zulässige Lösung gefunden werden kann.

Im nächsten Schritt S4 werden die optimierte Orchestrierung und/oder optimierten Parameter ausgegeben. Beispielsweise werden diese als optimierte Steuerungsstrategie an eine zentrale, modulübergreifende Steuerung übermittelt, die damit das modulare technische System steuern kann, Schritt S5. Die optimierte Steuerungsstrategie kann insbesondere optimierte Schaltzeitpunkte und -zustände und/oder physikalische Parameterwerte für die Ansteuerung der Modulfähigkeiten der Module umfassen, um beispielsweise mittels der Fähigkeiten der Module ein spezifiziertes Produktionsziel des modularen technischen Systems zu erreichen.

Alternativ kann ein Prüfergebnis ausgegeben werden, wenn beispielsweise keine Lösung für das Optimierungsproblem gefunden wird. In diesem Fall wird vorzugsweise die Spezifikation und/oder die Anordnung des modularen technischen Systems geändert und das Optimierungsproblem erneut gelöst.

Es kann somit eine modulübergreifend Steuerungsstrategie generiert werden, insbesondere ohne einen anlagenspezifischen Automatisierungscode zu schreiben. Bei einer Änderung eines Moduls und/oder der Anlagentopologie kann insbesondere das Optimierungsproblem erneut gelöst und somit eine an die Änderung angepasste Steuerungsstrategie ermittelt werden.

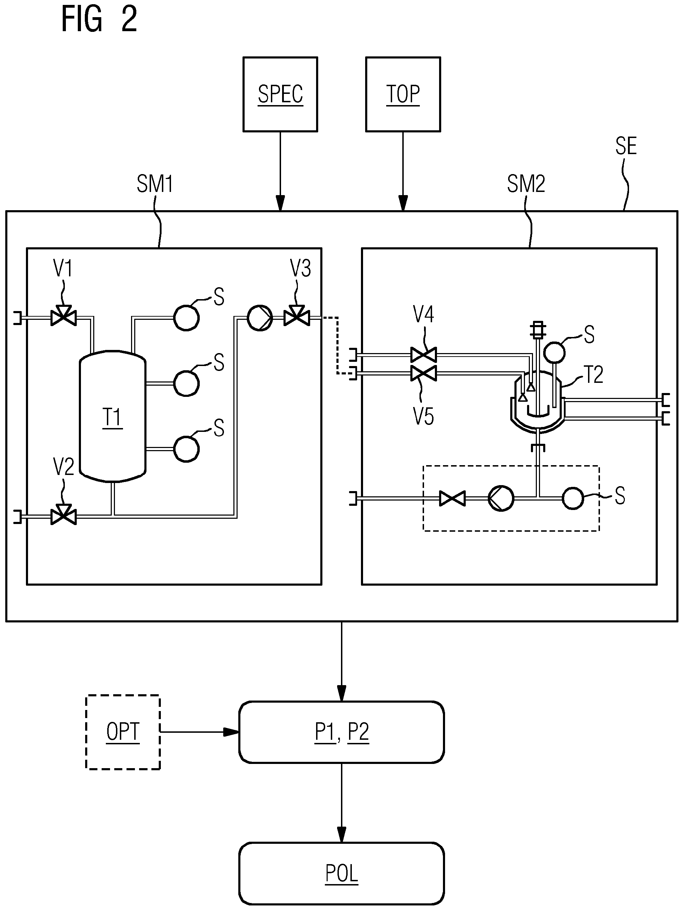

Figur 2 zeigt in schematischer Darstellung ein erfindungsgemäßes Verfahren zum Steuern einer modularen Prozessanlage, z.B. der chemischen Industrie. Für die Projektierung der Prozessanlage kann eine Optimierung der Orchestrierung und Parametrisierung der Services der modularen Anlage mittels eines Prozessors durchgeführt werden.

In Figur 2 sind die modulspezifischen computergestützten Simulationsmodelle SM1, SM2 für jeweilig entsprechende Module der modularen Prozessanlage schematisch dargestellt. Das Simulationsmodell SM1 des ersten Moduls bildet beispielsweise einen Tank T1 ab, der einen Einlass über ein Ventil V1 und Auslässen mit Ventilen V2, V3, sowie Sensoren S umfasst, und ist entsprechend parametrisiert. Die Sensoren S können beispielsweise dazu geeignet sein, einen Füllstand, eine Temperatur oder einen Druck des Tanks T1 zu messen. Das zweite Simulationsmodell SM2 bildet einen zweiten Tank T2 ab, der unter anderem Ventile V4, V5 und mindestens einem Sensor S umfasst. Insbesondere kann das jeweilige Modul noch weitere Komponenten umfassen. Für die weitere Beschreibung sind lediglich beispielhaft und schematisch Module skizziert.

Das erste Modul kann im realen modularen technischen System mit dem zweiten Modul gekoppelt sein. Dies ist beispielsweise in der Anordnung der modularen Prozessanlage festgelegt. Entsprechend wird das erste Simulationsmodell SM1 mit dem zweiten Simulationsmodell SM2 in einer geeigneten Simulationsumgebung SE gekoppelt (wie in Figur 2 mittels einer gestrichelten Linie dargestellt). So können beispielsweise Daten aus der Simulation des ersten Simulationsmodell SM1 dem zweiten Simulationsmodell SM2 übermittelt werden, um Prozessschritte der modularen Anlage entsprechend zu modellieren. Fähigkeiten des ersten Moduls können beispielsweise "Befüllen" oder "Entleeren" sein.

Das Aufsetzen der Gesamtsimulation, insbesondere die Kopplung der Simulationsmodell SM1 und SM2, erfolgt gemäß einer erfassten Anordnung TOP der modularen Anlage. Dazu wird die Anordnung TOP, z.B. in Form einer formalen Beschreibung, der Simulationsumgebung SE übergeben.

Vorzugsweise können die Gleichungssysteme der computergestützten Simulationsmodelle bereitgestellt werden. Beispielsweise kann ein Simulationsmodell als Datenstruktur, z.B. als ausführbare Datei mit Zugang zu den Gleichungen, bereitgestellt werden.

Die Kopplung der Simulationsmodelle kann insbesondere als Generierung eines Optimierungsproblems verstanden werden, wobei Randbedingungen durch die Anordnung und die Spezifikation des modularen technischen Systems gegeben sein können. Das Optimierungsproblem, z.B. MINLP oder MILP, kann mit einem geeigneten Löser (engl. Solver) gelöst werden. Das Ergebnis kann vorzugsweise eine optimierte Steuerungsstrategie, d.h. Trigger- und Parameterwerte für die Services der Module, für die Automatisierung des modularen technischen Systems sein.

Die Services der jeweiligen Module werden von einer zentralen Steuerung aufgerufen und gesteuert. In den entsprechenden Simulationsmodellen SM1, SM2 sind diese Fähigkeiten modelliert. Die optimierten Parameter und die optimierte Orchestrierung der Services werden mittels des Optimierungsverfahrens bestimmt.

Die modulare Prozessanlage kann beispielsweise derart gestaltet sein, dass mittels der einzelnen Module ein bestimmtes Produkt produziert wird. Die Spezifikation SPEC der modularen Anlage kann beispielsweise eine Anforderungsspezifikation, ein Produktionsziel und/oder Betriebsgrenzen der Anlage umfassen. Einzelne Prozessschritte und/oder Teil der Prozessschritte werden demnach von den einzelnen Modulen gemäß ihren Fähigkeiten durchgeführt. Die modulare Prozessanlage wird mittels einer zentralen Steuerung gesteuert. Dazu ist eine übergeordnete Steuerungsstrategie notwendig, die die einzelnen Steuerungskomponenten zeitlich und logisch korrekt anspricht und Steuerungsbefehle koordiniert.

Mittels eines Optimierungsverfahrens OPT wird erfindungsgemäß eine optimierte Orchestrierung P1 und/oder die optimierten Parameter P2 der Fähigkeiten der jeweiligen Module ermittelt, so dass die jeweiligen Fähigkeiten untereinander zeitlich und logisch koordiniert werden und die vorgegebene Spezifikation SPEC des modularen technischen Systems erfüllt wird. Insbesondere kann ein Gleichungssystem aufgestellt und dem Optimierungsverfahren übergeben werden, welches die gekoppelten Simulationsmodelle, die Spezifikation und die Anordnung der modularen Anlage abbildet. Mittels eines Lösers werden die optimierten Parameterwerte und die Orchestrierung der Services bestimmt.

Beispielsweise kann die Orchestrierung P1 der Services derart ermittelt werden, dass Prozessschritte zum einen in der richtigen Reihenfolge und zum anderen zu einem optimierten Zeitpunkt durchgeführt werden. Außerdem können derart die optimierten Parameterwerte P2 der Services ermittelt werden.

Beispielsweise kann eine Flüssigkeit in den ersten Tank T1 gefüllt, dort erhitzt, an den zweiten Tank T2 ausgegeben und dort mit einem weiteren Stoff vermischt werden. Die zeitliche und logische Reihenfolge unter der Berücksichtigung von Randbedingungen der modularen Anlage, wie z.B. Tankgröße, Umgebungstemperatur, etc., und abhängig von der Spezifikation der Anlage, z.B. ein Produktionsziel, kann mittels des Optimierungsverfahrens OPT bestimmt werden.

Die optimierte Orchestrierung P1 und optimierten Parameter P2 für die Services können insbesondere als Steuerungsstrategie für eine reale modulare Prozessanlage ausgegeben werden. Vorzugsweise können die optimierten Werte zur Einstellung der (realen) Steuerung, z.B. vor Inbetriebnahme der Prozessanlage, genutzt werden. Dazu können die Werte an eine modulübergreifende Steuerung POL übergeben werden, mittels der die modulare Prozessanlage gesteuert werden kann.

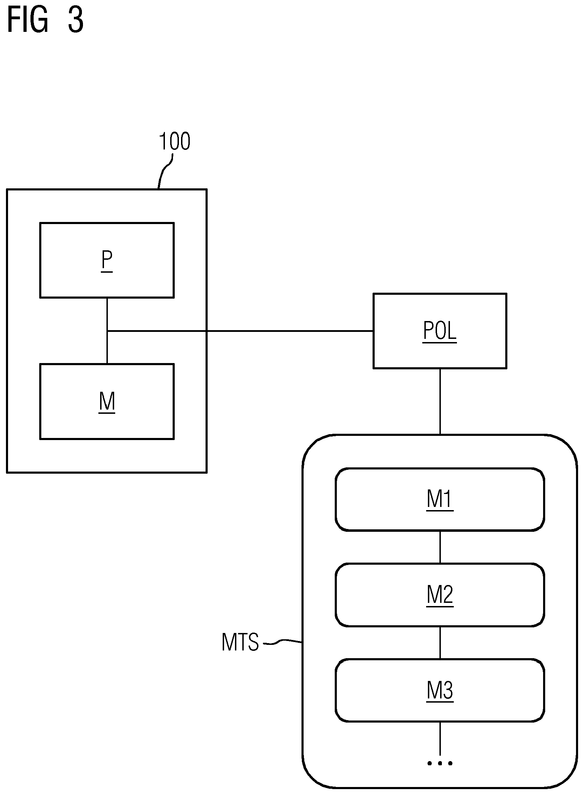

Figur 3 zeigt eine erfindungsgemäße Vorrichtung 100 zum Steuern eines modularen technischen Systems MTS, wobei die Vorrichtung 100 mit einer modulübergreifenden Steuerung POL gekoppelt ist. Das modulare technische System MTS kann eine Vielzahl von Modulen M1, M2, M3, ... umfassen, die miteinander gekoppelt sind, um z.B. Schritte eines Produktionsprozesses durchzuführen. Die Vorrichtung 100 umfasst mindestens einen Prozessor P zum Durchführen eines erfindungsgemäßen Verfahrens, wie beispielhaft in Figur 1 oder 2 gezeigt. Die erfindungsgemäße Vorrichtung 100 kann außerdem mindestens eine Speichereinheit M umfassen, auf der beispielsweise ermittelte Orchestrierungswerte und Parameter der Services der Module M1, M2, M3, ... gespeichert sein können.

Bei Änderung eines der Anordnung TOP und/oder der Spezifikation des modularen technischen Systems MTS, z.B. durch einen Modultausch, kann erneut eine Optimierung der Orchestrierung und/oder der Parameter der Fähigkeiten durchgeführt werden, um die geänderte Anordnung und/oder Spezifikation zu erfüllen.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Computerimplementiertes Verfahren zum Steuern eines modularen technischen Systems (MTS), wobei das modulare technische System (MTS) eine Vielzahl von Modulen (M1, M2, M3, ...) umfasst und Fähigkeiten der Module von einer modulübergreifenden Steuerung (POL) gesteuert werden, wobei
- für ein jeweiliges Modul (M1, M2, M3, ...) des modularen technischen Systems (MTS) ein modulspezifisches computergestütztes Simulationsmodell (SM1, SM2, ...) bereitgestellt wird (S1), wobei die Fähigkeiten des entsprechenden Moduls (M1, M2, M3, ...) im modulspezifischen Simulationsmodell (SM1, SM2, ...) spezifiziert sind,
- gemäß einer vorgegebenen Anordnung (TOP) der Module des modularen technischen Systems (MTS) die modulspezifischen computergestützten Simulationsmodelle (SM1, SM2, ...) miteinander gekoppelt werden (S2),
- eine Orchestrierung (P1) und/oder Parameter (P2) der Fähigkeiten der gekoppelten modulspezifischen Simulationsmodelle (SM1, SM2, ...) mittels eines Optimierungsverfahrens (OPT) derart ermittelt werden (S3), dass die Fähigkeiten untereinander zeitlich und logisch koordiniert werden,
und
- die optimierte Orchestrierung und/oder die optimierten Parameter (P1, P2) zum Steuern des modularen technischen Systems (MTS) ausgegeben werden (S4).

2. Computerimplementiertes Verfahren nach Anspruch 1, wobei geprüft wird, ob die ermittelte Orchestrierung und/oder die ermittelten Parameter (P1,P2) der Fähigkeiten der gekoppelten modulspezifischen computergestützten Simulationsmodelle eine vorgegebenen Spezifikation (SPEC) des modularen technischen Systems (MTS) erfüllen, und ein Ergebnis der Prüfung ausgegeben wird.

3. Computerimplementiertes Verfahren nach einem der vorhergehenden Ansprüche, wobei die Orchestrierung (P1) und/oder die Parameter (P2) der Fähigkeiten mittels des Optimierungsverfahrens (OPT) derart bestimmt werden, dass eine vorgegebene Zielfunktion für das modulare technische System (MTS) optimiert wird.

4. Computerimplementiertes Verfahren nach einem der vorhergehenden Ansprüche, wobei die Orchestrierung (P1) und/oder die Parameter (P2) der Fähigkeiten mittels des Optimierungsverfahrens (OPT) derart bestimmt werden, dass mindestens eine vorgegebene Randbedingung eines modulspezifischen computergestützten Simulationsmodells (SM1, SM2, ...) erfüllt wird.

5. Computerimplementiertes Verfahren nach einem der vorhergehenden Ansprüche, wobei für ein jeweiliges Modul ein modulspezifisches computergestütztes Simulationsmodell (SM1, SM2, ...) erstellt wird, wobei die Fähigkeiten des entsprechenden Moduls (M1, M2, M3, ...) im modulspezifischen Simulationsmodell (SM1, SM2, ...) semantisch beschrieben werden.

6. Computerimplementiertes Verfahren nach einem der vorhergehenden Ansprüche, wobei, nach einer Änderung der Anordnung (TOP) des modularen technischen Systems (MTS), gemäß der geänderten Anordnung die modulspezifischen computergestützten Simulationsmodelle (SM1, SM2, ...) miteinander gekoppelt und eine optimierte Orchestrierung und/oder optimierte Parameter der Fähigkeiten ermittelt werden.

7. Computerimplementiertes Verfahren nach einem der vorhergehenden Ansprüche, wobei nach einer Änderung der Spezifikation (SPEC) des modularen technischen Systems eine Orchestrierung und/oder Parameter (P1, P2) der Fähigkeiten mittels eines Optimierungsverfahrens (OPT) derart ermittelt werden, dass die geänderte Spezifikation des modularen technischen Systems erfüllt wird.

8. Computerimplementiertes Verfahren nach einem der vorhergehenden Ansprüche, wobei die optimierte Orchestrierung und/oder die optimierten Parameter (P1, P2) an die modulübergreifende Steuerung (POL) ausgegeben werden.

9. Computerimplementiertes Verfahren nach einem der vorhergehenden Ansprüche, wobei das modulare technische System anhand der optimierten Orchestrierung und/oder der optimierten Parameter (P1, P2) der Fähigkeiten gesteuert wird (S5).

10. Vorrichtung (100) zum Steuern eines modularen technischen Systems (MTS), wobei die Vorrichtung (100) mindestens einen Prozessor (P) zum Durchführen der Schritte eines Verfahrens nach den vorhergehenden Ansprüchen aufweist.

11. Vorrichtung nach Anspruch 10, wobei die Vorrichtung mit einer modulübergreifenden Steuerung (POL) zum Steuern des modularen technischen Systems (MTS) gekoppelt ist.

12. Computerprogrammprodukt eingerichtet zum Ausführen eines computerimplementierten Verfahrens nach einem der Ansprüche 1 bis 9.

13. Computerlesbares Speichermedium mit einem Computerprogrammprodukt nach Anspruch 12.
